# DEMANDE DE BREVET EUROPEEN

(11) **EP 1 598 828 A2**
(43) Date de publication de la demande: **23.11.2005**
(21) Numéro de dépôt: 05291023.9
(22) Date de dépôt: 12.05.2005
(51) Int. Cl.: G11B 33/04

(54) **Support de rangement cassettes multimédia**

(30) Priorité: 18.05.2004 GB 0411002; 22.10.2004 CA 2486834
(71) Demandeur: Nicolet Plastique Ltée, Nicolet, Quebec J3T 1W3 (CA)
(72) Inventeur: Ménard, Louis, Trois-Rivieres Québec G8Y 7N9 (CA)
(74) Mandataire: Santarelli

(57) **Abrégé**

L'invention vise un support de rangement multimédia pour recevoir et maintenir des CD ou DVD en tant que tels, des pochettes contenant des CD ou DVD ou des boîtiers en plastique contenant des CD ou DVD, quelle que soit la taille desdits boîtiers. Ce support se présente sous la forme d'une pièce comprenant au moins une et, de préférence, plusieurs ouvertures de rangement chacune pourvue de parois opposées et de deux extrémités, chaque ouverture étant également pourvue d'un système de fixation rétractable constitué de pinces déformables. Chaque ouverture comprend également des retraits dans au moins une de ses deux extrémités pour permettre de recevoir et soutenir aussi bien des disques CD ou DVD ou des pochettes ou des boîtiers les contenant. Le support peut être également pourvu de trous et de fentes disposés de façon à permettre sa fixation à même une surface. Avantageusement aussi, le support peut avoir des côtés latéraux pourvus d'un dispositif d'attaches conçus pour permettre la fixation d'un support adjacent, dans le but de pouvoir assembler plusieurs supports côte à côte.

## Description

### DOMAINE DE L'INVENTION

La présente invention a pour objet un support de rangement multimédia adapté pour recevoir et maintenir des CD ou DVD en tant que tels, c'est-à-dire sous forme de disques, des pochettes contenant des CD ou DVD, ou encore des boîtiers en plastique contenant des CD ou DVD, et ce quelle que soit la taille desdites pochettes ou desdits boîtiers.

### ARRIÈRE PLAN TECHNOLOGIQUE

Dans le domaine des médias, il existe des moyens bien connus pour stocker les informations ou données, telles que des données informatiques, de la musique, des films, etc...Un premier de ces moyens est le disque compact (habituellement appelé CD). Un autre de ces moyens est le disque vidéo digital (habituellement appelé DVD).

Il est connu que les CD et les DVD sont habituellement stockés dans des pochettes ou dans des boîtiers en plastique qui peuvent être de différentes formes et épaisseurs.

Il est connu également qu'il existe déjà des supports permettant de stocker des DVD ou CD en vue de les ranger. Le problème qu'il y a toutefois avec les supports existants est qu'ils sont chacun spécifiquement façonnés et dimensionnés pour recevoir un type de CD ou DVD de taille donnée. Or, en pratique, les consommateurs ont très souvent de nombreux types de pochettes et/ou boîtier CD ou DVD de forme et/ou épaisseur différente. Il existe donc un besoin pour un support de rangement pour CD et/ou DVD, qui soit versatile et d'utilisation facile, tout en présentant bien entendu un aspect esthétique et une possibilité d'installation extrêmement simple dans n'importe quel type de meuble de rangement ou même directement à même une surface plane telle que la table d'un meuble ou d'un bureau. En d'autres mots, il existe un besoin de fournir un support qui puisse être utilisé avec n'importe quel type de CD, DVD ou pochettes et boîtiers les contenant et qui puisse être assemblé à d'autres supports analogues pour former une zone de rangement installable en fonction de la situation qui lui est choisie sur les parois verticales d'une structure porteuse ou d'un meuble, ou sur la surface d'une table ou d'un bureau ou encore à des colonnes pour former un meuble de rangement complètement indépendant.

### SOMMAIRE DE L'INVENTION

La présente invention a donc pour objet un support de rangement multimédia qui répond aux divers besoins ci-dessus évoqués.

Plus précisément, l'invention a pour objet un support de rangement multimédia pour recevoir et maintenir des CD ou DVD en tant que tels, des pochettes contenant des CD ou DVD ou des boîtiers en plastique contenant des CD ou DVD, quelle que soit la taille desdits boîtiers, caractérisée en ce qu'elle se présente sous la forme d'une pièce comprenant une ou plusieurs ouvertures de rangement chacune pourvue de deux parois opposés et de deux extrémités, chaque ouverture étant également pourvue d'un système de fixation rétractable constitué de pinces déformables de préférence placées près d'une des extrémités de ladite ouverture, chaque ouverture comprenant également des retraits dans au moins une de ses deux extrémités pour permettre de recevoir et soutenir aussi bien des disques CD ou DVD des pochettes ou des boîtiers les contenant.

Lorsque la pièce du support comprend plusieurs ouvertures, celles-ci sont disposées côte à côte et sont positionnées de façon à ce que leurs extrémités respectives soient dans des mêmes plans et leurs parois respectives soient adjacentes les unes aux autres.

Dans ce dernier cas, les parois adjacentes des ouvertures de rangement adjacentes sont de préférence séparées pour former un espace dimensionné pour permettre de recevoir un CD ou DVD tel quel.

De préférence aussi, le support de rangement selon l'invention est pourvu également de trous et de fentes disposés de façon à permettre sa fixation à même différentes surfaces, qu'elles soient horizontales, verticales ou inclinées.

Dans un mode réalisation préféré, le support est conçu pour être installé à angle à même une structure porteuse.

Dans un autre mode de réalisation préféré, le support de rangement présente une surface inférieure sensiblement plane et horizontale, ce qui permet de le poser à même une table, un comptoir ou le dessus d'un bureau sans avoir à le fixer à des parois verticales ou à tout autre structure porteuse.

Tel que présentement décrit, le support de rangement selon l'invention présente l'avantage d'offrir une versatilité pour recevoir et stocker des CD, des DVD, ou des pochettes ou boîtiers les contenant, quelle que soit la taille de ceux-ci. Ce support de rangement a également l'avantage de présenter une modularité qui permet de l'associer à d'autres supports analogues pour répondre aux besoins en quantité d'espace de rangement requis.

En outre, ce support de rangement permet en fonction de la forme qui lui a été donnée, de l'installer à même les parois verticales d'un meuble ou d'une structure porteuse, à plat sur une table ou un bureau ou à des colonnes pour former un meuble de rangement.

Le support de rangement selon l'invention présente enfin l'avantage d'être de structure extrêmement simple et de construction facile.

L'invention sera mieux comprise à la lecture de la description non restrictive qui suit de plusieurs modes de réalisation préférés de celle-ci, ladite description étant faite en se référant aux dessins annexés.

### BRÈVE DESCRIPTION DES DESSINS

La Figure 1 est une vue en perspective avant d'un support de rangement multimédia selon un premier mode de réalisation préféré de l'invention, dans lequel le support est pourvu de huit ouvertures;
Les Figures 2 à 6 sont des vues de face, de côté, de dessus, de dessous et de derrière du support de rangement multimédia, illustré sur la Figure 1;
La Figure 7 est une vue en perspective similaire à la Figure 1, montrant l'universalité du support pour recevoir des disques, pochettes ou boîtiers de diverses formes;
La Figure 8 est une vue en perspective montrant la façon dont plusieurs supports tels qu'illustrés sur les Figures 1 à 7 peuvent être attachés les uns aux autres et fixés à même une surface telle que par exemple, à même les parois d'une étagère;
La Figure 9 est une vue partielle de face de deux supports adjacents de type illustré sur la Figure 8 avant que ceux-ci ne soient attachés l'un à l'autre, cette vue illustrant la façon dont ils sont attachés à l'aide de leurs dispositifs d'attache latéraux;
La Figure 10 est une vue partielle en perspective illustrant un côté d'un support de rangement multimédia similaire à celui-ci illustré sur les Figures 1 à 9 mais dont le dispositif d'attache latéral est légèrement différent;
La Figure 11 est une vue en perspective éclatée illustrant plusieurs supports de rangement multimédia selon un second mode de réalisation préféré de l'invention, dans lequel chaque support n'est pourvu que d'une seule ouverture; et
La Figure 12 est une vue en perspective illustrant un meuble de rangement fait de supports tel qu'illustré sur la Figure 11.

### DESCRIPTION DE PLUSIEURS MODES DE RÉALISATION PRÉFÉRÉS DE L'INVENTION

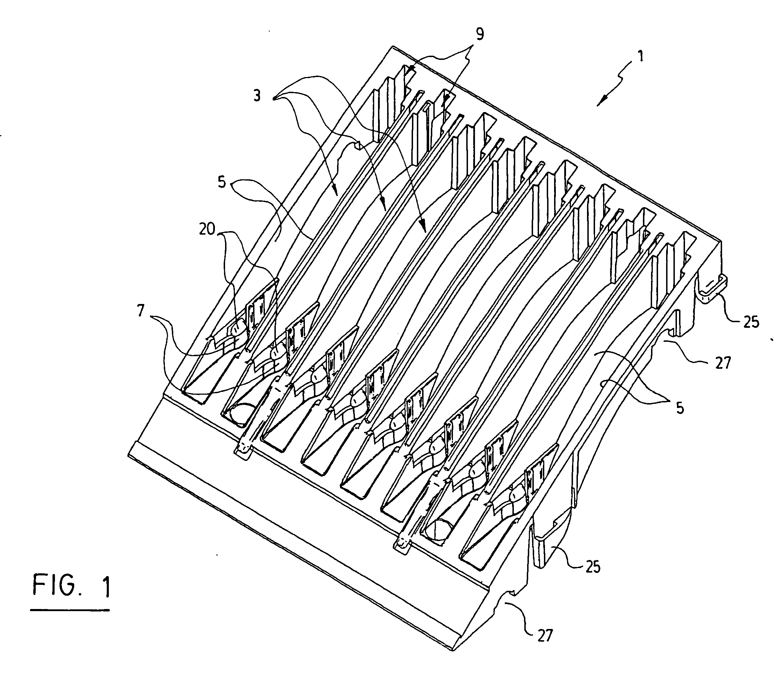

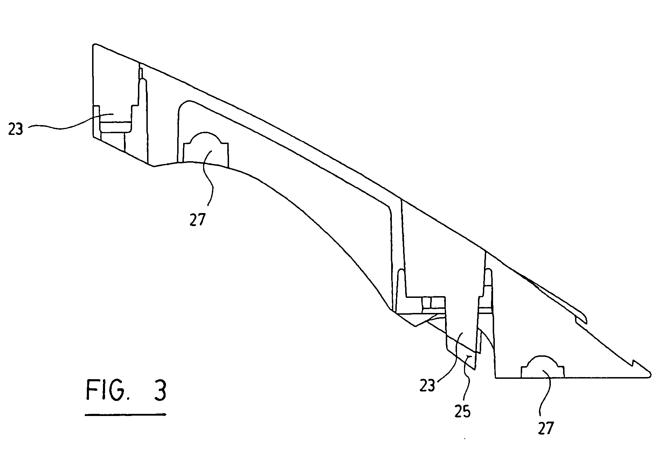

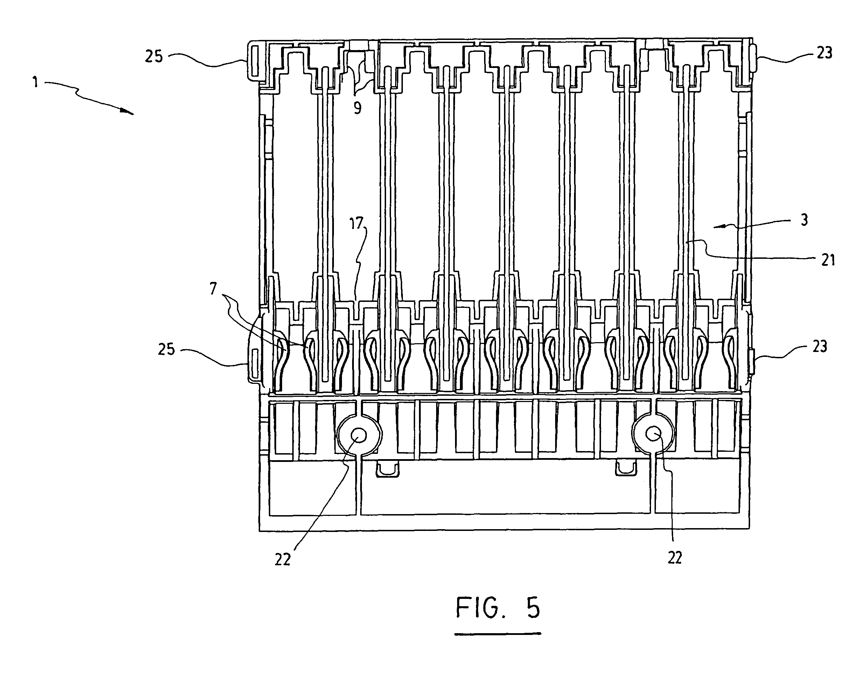

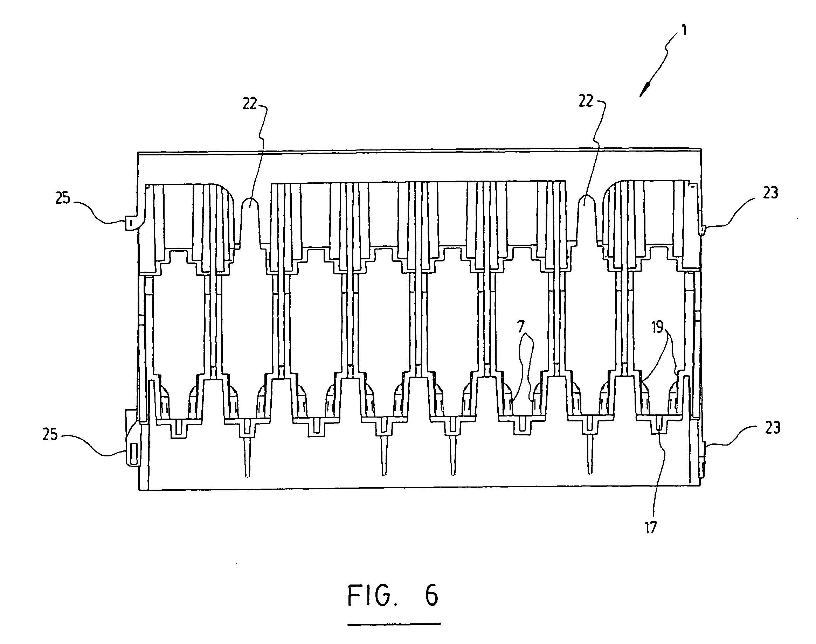

Le support de rangement multimédia selon le premier mode préféré de réalisation de l'invention illustré dans les Figures 1 à 9 des dessins annexés, est constituée d'une pièce 1 de préférence moulée en plastique tel qu'en résine polymérique polyethylene/polypropylene. Cette pièce 1 comprend une pluralité d'ouvertures de rangement 3 qui sont disposées côte à côte et sont positionnées de façon à ce que leurs extrémités respectives soient dans des mêmes plans et leurs parois 5 soient adjacentes les unes aux autres. Dans ces Figures, le support illustré comprend huit ouvertures. On comprendra toutefois que ce support pourrait en avoir moins ou plus.

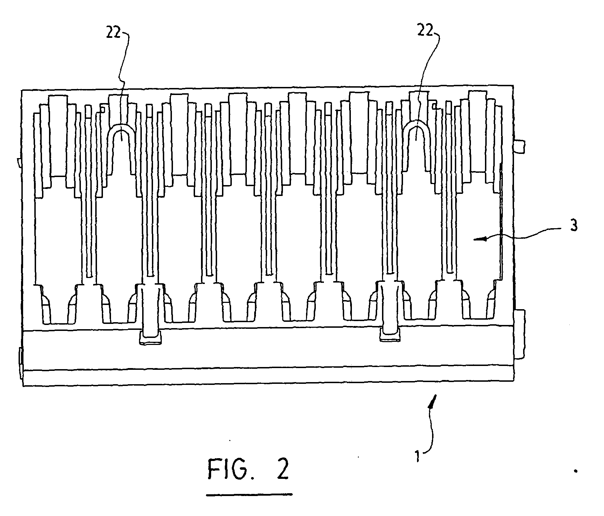

Tel qu'illustré sur la Figure 2, la pièce 1 formant le support a, vu de profil, une épaisseur relativement constante et mince, ce qui fait que, lorsqu'elle est couchée, elle occupe peu d'espace et peut donc être emballée avec de nombreuses autres pièces identiques dans une même boîte, ceci répondrait aux des exigences habituelles dans le domaine du mobilier à assembler.

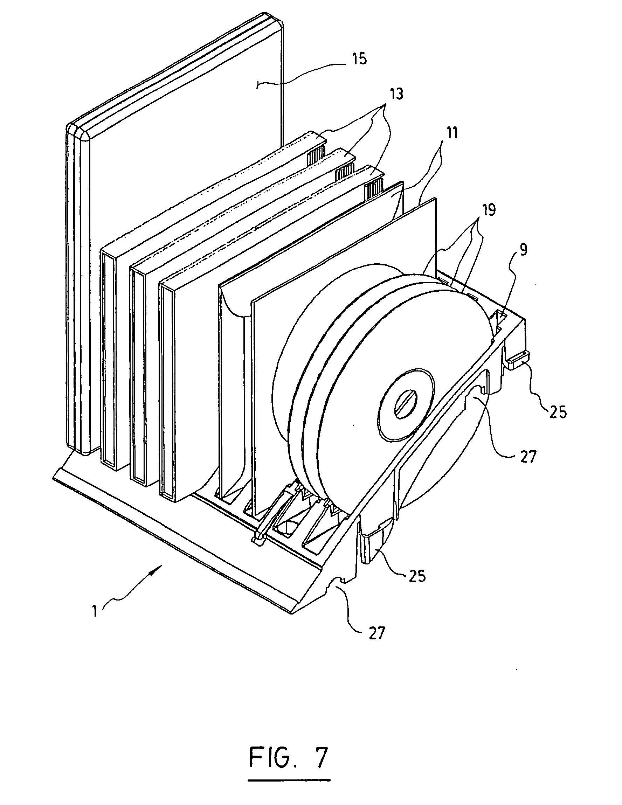

Lorsque la pièce 1 est installée, elle est placée à angle. Dans cette position, les parois opposées 5 de chaque ouverture de rangement 3 se trouvent surélevées et aident à une meilleure retenue des disques, pochettes ou boîtiers qui peuvent y être insérés, tel que cela est clairement illustré sur la Figure 7. En fait, dans cette position, les parois 5 de chaque ouverture 3 permettent une bonne retenue, que ce soit aussi bien en position horizontale, position verticale ou position légèrement inclinée.

Tel qu'il est également illustré dans les dessins annexés, chaque ouverture de rangement 3 comprend un système d'éléments de fixation rétractables constitués de deux pinces 7 qui sont déformables du fait de l'élasticité de matériau utilisé pour le moulage, ce qui permet une adaptation automatique au format de la pochette ou du boîtier à supporter. Les pinces 7 sont de préférence placées du côté d'extrémité qui se trouve la plus basse lorsque le support de rangement 1 est installé. De l'autre côté de chaque ouverture se trouvent deux retraits 9 alignés avec l'axe central de l'ouverture de rangement, chaque retrait 9 ayant une dimension allant en se rétrécissant au fur et à mesure qu'elle se rapproche du rebord supérieur du support.

Du fait de ces retraits 9 et de la présence des pinces 7, il est possible pour chaque ouverture 3 de recevoir avec la même efficacité des pochettes 11 de disques CD ou DVD , des boîtiers 13 de disques CD ou DVD de petite taille, ou des boîtiers 15 de DVD, tel qu'illustré sur la Figure 7.

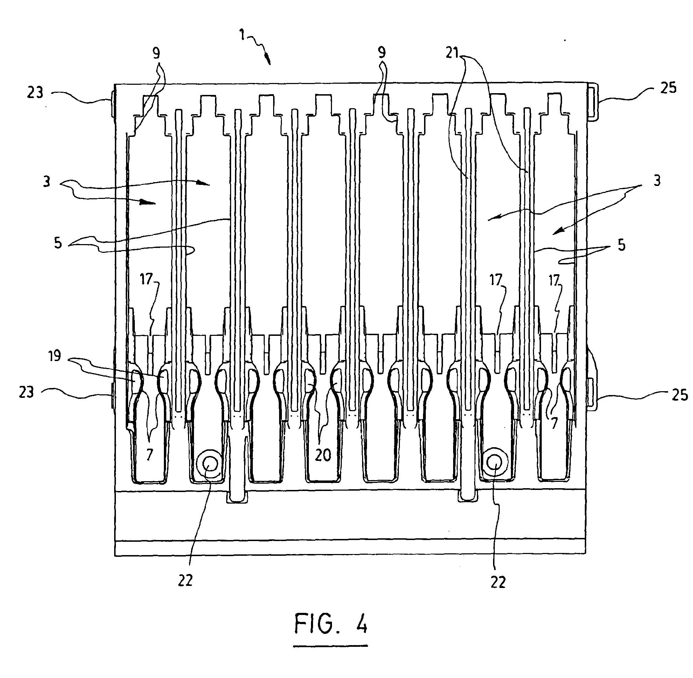

Dans le fond de la partie inférieure avant de chaque ouverture de rangement 3 se trouve avantageusement un autre retrait 17 central qui est spécialement adapté pour permettre à l'ouverture en question de recevoir un disque CD ou DVD tel quel, tels que les disques 19 illustrés sur la Figure 7. Ce retrait 17 est clairement illustré sur les Figures 4 à 6. Entre les parois adjacentes de deux ouvertures de rangement adjacentes 3 se trouve également avantageusement aussi un espace 21 qui est lui aussi dimensionné de façon à permettre de recevoir un disque19, tel qu'il est également illustré sur la Figure 7. Le support selon l'invention a donc la capacité de recevoir une pluralité de disques sans pochette.

Il convient de mentionner ici que le retrait 17 à laquelle il a été fait référence précédemment, est placé entre les pinces 7 en plein dans l'axe de l'ouverture de rangement pour éviter tout contact avec les pinces 7.

Tel qu'il est illustré notamment sur les Figures 1 et 4, chacune des pinces déformables 7 est avantageusement pourvue d'une partie à angle le long de sa surface supérieure 20 afin de faciliter l'insertion d'un média. En effet, en insérant le média dans l'ouverture de rangement, l'extrémité inférieure de ce média vient se reposer sur la partie à angle 20 et amène les pinces à s'ouvrir.

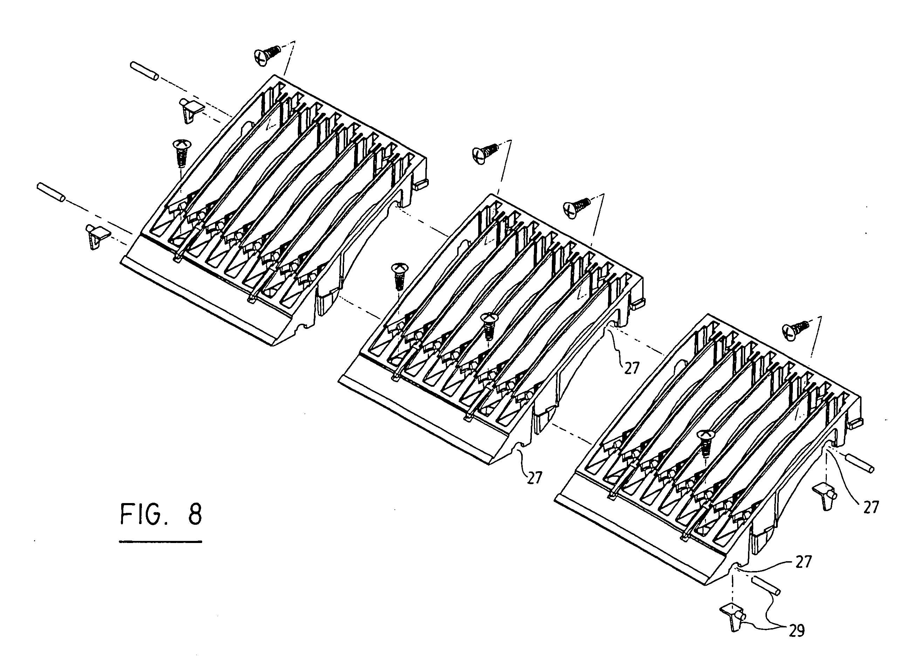

Tel qu'il est illustré plus en détail sur la Figure 8, chaque support 1 peut être fixé à même une surface appropriée à l'aide de vis insérables dans des trous ou fentes 22 spécialement prévus à cet effet dans la partie inférieure avant du support et/ou dans la surface arrière de celle-ci (voir les Figures 2, 5 et 6). De préférence, chaque côté du support comprend également, aussi bien en haut qu'en bas, des cavités 27 qui permettent l'utilisation de goujons ou de supports de tablette standard 29 tel qu'illustré sur la Figure 8. Ceci permet d'installer un jeu de supports directement dans une étagère sans avoir à procéder à une fixation permanente de celle-ci au moyen de vis.

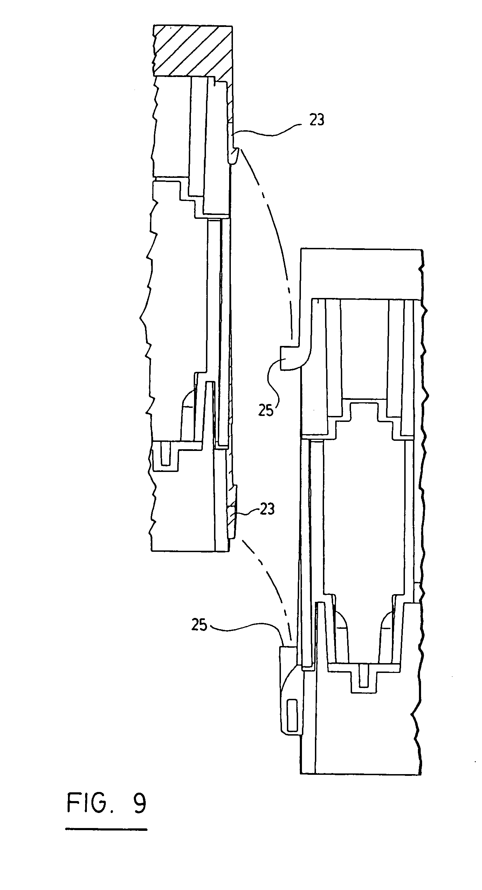

Tel qu'il est également illustré en particulier sur la Figure 9, chaque support est pourvu aussi sur ses côtés d'un dispositif de crochets 23 et de cavités 25 pour recevoir les crochets d'un support adjacent, ceci permettant l'imbrication de plusieurs supports l'un à côté de l'autre, tel qu'illustré sur la Figure 8.

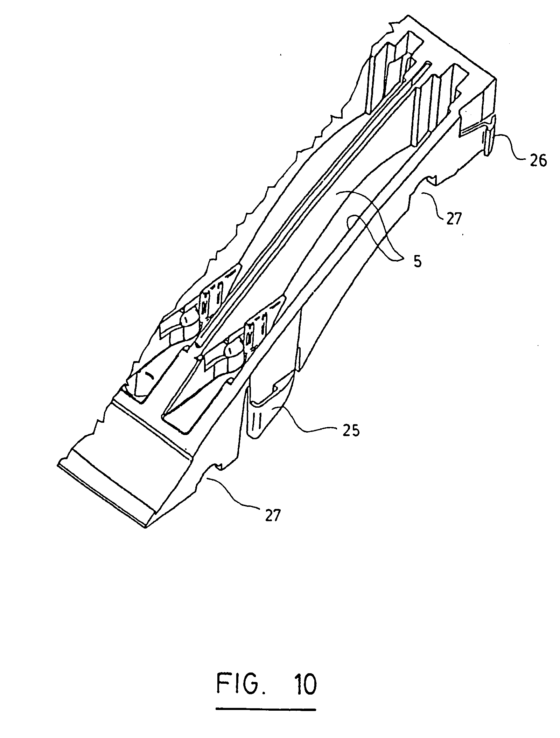

Il convient de mentionner que d'autres dispositifs d'attaches conventionnels pourraient être utilisés à la place de ceux précédemment décrits pour assurer l'imbrication de plusieurs supports l'un à côté de l'autre. À ce sujet, on peut se référer à la Figure 10 qui illustre d'un autre type d'attache incluant un ensemble de cavités 25 latérales, lequel ensemble est utilisé en combinaison avec un ensemble de dents latérales 26 disposées sur le côté opposé.

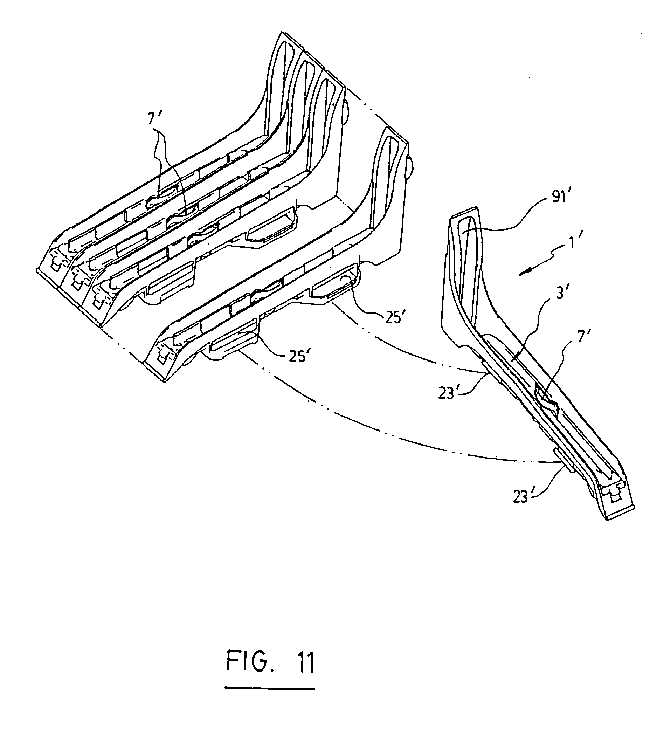

La Figure 11 des dessins annexés illustre un support de rangement multimédia selon un second mode de réalisation préféré de l'invention. Dans ce second mode de réalisation, la pièce 1' ne comprend qu'une seule ouverture de rangement 3'. Cette pièce 1' a également, lorsque vue de profil, une forme différente de celle de la pièce 1 illustrée sur les figures 1 à 10. Ainsi, elle présente une surface inférieure plane et horizontale, ce qui permet de la poser à même une table ou le dessus d'un bureau sans avoir à la fixer aux parois d'un meuble ou d'une structure portante. Comme dans le mode de réalisation précédemment décrit, l'ouverture de rangement 3' comprend aussi un même système de fixation rétractable constitué de deux pinces 7' qui sont déformables du fait de l'élasticité du matériau utilisé pour le moulage. La pièce 1'comprend en outre un retrait 9' disposé dans son extrémité arrière pour permettre de recevoir et soutenir aussi bien des CD ou DVD que des pochettes ou boîtiers. La pièce 1' comprend enfin un dispositif d'attache constitué de cavités 25' placées et façonnées de façon à recevoir les crochets 23' d'un support adjacent, ceci permettant l'imbrication de plusieurs supports de l'un à côté de l'autre, tel qu'illustré dans la partie gauche de la figure 11.

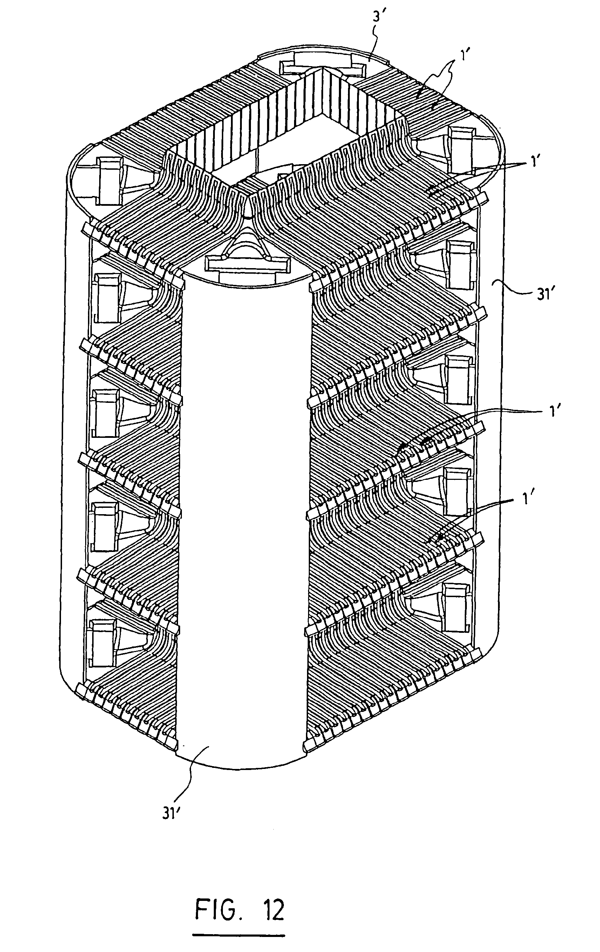

Les pièces 1' ainsi imbriquées peuvent ensuite être connectées et montées sur plusieurs étages à même des colonnes 31', tel qu'il est illustré sur la figure 12. Dans ce mode de réalisation particulier, on voit que les colonnes 31' sont construites de façon à former un assemblage de forme sensiblement carrée. On comprendra toutefois que d'autres formes, telle une forme triangulaire pourrait également être obtenue. On comprendra également que le meuble de rangement ainsi obtenu peut être pourvu d'autres éléments, tels que par exemple, une base permettant un pivotement central autour d'un axe vertical.

Il va de soi que diverses autres modifications pourraient être apportées à la présente invention sans sortir du cadre des revendications ci-jointes en annexe.

## Revendications

1. Un support de rangement mulmédia pour recevoir et maintenir des CD ou DVD en tant que tels, des pochettes contenant des CD ou DVD ou des boîtiers en plastique contenant des CD ou DVD, quelle que soit la taille desdits boîtiers, **caractérisée en ce qu'**il se présente sous la forme d'une pièce comprenant au moins une ouverture de rangement pourvue de deux parois opposées et de deux extrémités, chaque ouverture étant également pourvue d'un système de fixation rétractable constitué de pinces déformables, chaque ouverture comprenant également des retraits dans au moins une de ses deux extrémités pour permettre de recevoir et soutenir aussi bien des disques CD ou DVD ou des pochettes ou des boîtiers les contenant.

2. Le support de rangement selon la revendication 1, **caractérisé en ce que** la pièce comprend plusieurs ouvertures de rangement et **en ce que** lesdites ouvertures sont disposées côte à côte, et sont positionnées de façon à ce que leurs extrémités respectives soient dans des mêmes plans et leurs parois respectives soient adjacentes les unes aux autres.

3. Le support de rangement selon la revendication 2, **caractérisé en ce que** les parois adjacentes des ouvertures de rangement adjacentes sont séparées pour former un espace dimensionné pour permettre de recevoir un CD ou DVD tel quel.

4. Le support de rangement selon l'une quelconque des revendications 1 à 3, **caractérisé en ce qu'**il est pourvu également de trous et de fentes disposés de façon à permettre sa fixation à même une surface horizontale, verticale ou inclinée.

5. Le support de rangement selon l'une quelconque des revendications 1 à 4, **caractérisé en ce qu'**il présente des côtés latéraux pourvus d'un dispositif d'attache conçu pour permettre l'imbrication d'un support de rangement analogue adjacent, dans le but de pouvoir assembler plusieurs supports côte à côte.

6. Le support de rangement selon l'une quelconque des revendications 1 à 5, **caractérisé en ce que** les pinces déformables sont placées près de l'une des extrémités de l'ouverture les contenant.

7. Le support de rangement selon l'une quelconque des revendications 1 à 6, **caractérisé en ce que** la pièce a une épaisseur qui est sensiblement constante lorsque vue de côté et le support est conçu pour être installé à angle à même une structure porteuse.

8. Le support de rangement selon l'une quelconque des revendications 1 à 6, **caractérisé en ce que** la pièce présente une surface inférieure sensiblement plane et horizontale en vue de permettre de poser le support à plat sur une table, un comptoir ou un dessus de bureau.
